# EUROPEAN PATENT APPLICATION

(11) **EP 4 793 883 A1**
(43) Date of publication of application: **19.08.2026**
(21) Application number: 24900276.7
(22) Date of filing: 07.10.2024
(51) Int. Cl.: G06T 7/00, G01M 3/38, G06T 7/246

(54) **GAS LEAKAGE MONITORING DEVICE, GAS LEAKAGE MONITORING METHOD, AND PROGRAM**

(30) Priority: 04.12.2023 JP 2023204587
(71) Applicant: Mitsubishi Heavy Industries, Ltd., Chiyoda-ku Tokyo 100-8332 (JP)
(72) Inventor: ROYAMA Daiki, Tokyo 100-8332 (JP); IKEDA Takashi, Tokyo 100-8332 (JP); SUZUKI Keita, Tokyo 100-8332 (JP); ARAKAWA Yoshiaki, Tokyo 100-8332 (JP); KAMIHARA Nobuyuki, Tokyo 100-8332 (JP); INUI Masayuki, Tokyo 100-8332 (JP)
(74) Representative: Studio Torta S.p.A.
(86) International application number: PCT/JP2024/035756
(87) International publication number: WO 2025/120979

(57) **Abstract**

This gas leakage monitoring device comprises: an image data acquisition unit that acquires, as original image data, image data generated by capturing images at different times; a vector generation unit that selects two pieces of original image data in chronological order from the original image data, and performs predetermined image processing for calculating the movement direction and movement speed of an object included in the images, for the selected two pieces of original image data, to generate a vector indicating the movement direction and movement speed for each pixel included in the original image data; and a frequency distribution generation unit that classifies the vectors generated by the vector generation unit into sections of predetermined vector lengths, and generates a frequency distribution for gas leakage monitoring.

## Description

### Technical Field

The present disclosure relates to a gas leakage monitoring device, a gas leakage monitoring method, and a program. Priority is claimed to Japanese Patent Application No. 2023-204587, filed December 4, 2023, the content of which is incorporated herein by reference.

### Background Art

Gases such as CO2 gas each have a characteristic absorption wavelength band, and a method for detecting gas leakage using characteristics of the absorption wavelength band is known (for example, refer to PTL 1). For example, CO2 gas has an absorption wavelength band in the vicinity of 4.3 µm. Therefore, the following phenomenon occurs by performing imaging with an infrared camera including a filter that transmits infrared rays of 4.3 µm. In a case where CO2 gas is present in a portion of a region between an imaging target and the infrared camera, an intensity difference occurs, due to absorption by the CO2 gas, between electromagnetic waves radiated from the imaging target and directly reaching the infrared camera and electromagnetic waves passing through the CO2 gas and reaching the infrared camera. The intensity difference of the electromagnetic waves appears as a difference in luminance values in image data generated by imaging with the infrared camera, thereby enabling visualization of the CO2 gas.

As a method for detecting the CO2 gas visualized in the image data, for example, PTL 1 discloses the following method. The image data generated by imaging with the infrared camera has the difference in luminance values as described above. This method is a method of detecting a pixel in which a change amount of a luminance value per unit time is equal to or less than a preset threshold value as a pixel in which gas is shown, by using the difference in luminance values.

### Citation List

### Patent Literature

[PTL 1] Japanese Patent No. 6665863

### Summary of Invention

### Technical Problem

In this regard, it is desired to determine the presence or absence of gas leakage with high accuracy in as short a time as possible. From this viewpoint, it is considered that the processing of observing the change amount of the luminance value per unit time for each pixel, which is included in the method disclosed in PTL 1, has the following problems. That is, in order to improve the accuracy of the change amount in luminance values per unit time, it is necessary to increase the number of captured images, but there is a problem in that the processing time is increased when the number of images is increased.

The present disclosure has been made to solve the above-described problems, and an object of the present disclosure is to provide a gas leakage monitoring device, a gas leakage monitoring method, and a program capable of indicating the presence or absence of gas leakage with high accuracy in a shorter time.

### Solution to Problem

In order to solve the above-described problems, a gas leakage monitoring device according to the present disclosure includes: an image data acquisition unit that acquires, as original image data, image data generated by being captured at different times; a vector generation unit that selects two pieces of original image data in chronological order from the original image data, and performs predetermined image processing of calculating a moving direction and a moving speed of an object included in an image on the selected two pieces of original image data to generate a vector indicating the moving direction and the moving speed for each pixel included in the original image data; and a frequency distribution generation unit that classifies the vectors generated by the vector generation unit into predetermined intervals of vector length and generates a frequency distribution for gas leakage monitoring.

A gas leakage monitoring method according to the present disclosure includes: a step of acquiring, as original image data, image data generated by being captured at different times; a step of selecting two pieces of original image data in chronological order from the acquired original image data and performing predetermined image processing of calculating a moving direction and a moving speed of an object included in an image on the selected two pieces of original image data to generate a vector indicating the moving direction and the moving speed for each pixel included in the original image data; and a step of classifying the generated vectors into predetermined intervals of vector length and generating a frequency distribution for gas leakage monitoring.

A program according to the present disclosure causes a computer to execute: a step of acquiring, as original image data, image data generated by being captured at different times; a step of selecting two pieces of original image data in chronological order from the acquired original image data and performing predetermined image processing of calculating a moving direction and a moving speed of an object included in an image on the selected two pieces of original image data to generate a vector indicating the moving direction and the moving speed for each pixel included in the original image data; and a step of classifying the generated vectors into predetermined intervals of vector length and generating a frequency distribution for gas leakage monitoring.

### Advantageous Effects of Invention

According to the gas leakage monitoring device, the gas leakage monitoring method, and the program of the present disclosure, it is possible to indicate the presence or absence of gas leakage with high accuracy in a shorter time.

### Brief Description of Drawings

FIG. 1 is a block diagram showing a configuration example of a gas leakage monitoring system according to an embodiment of the present disclosure.
FIG. 2 is a flowchart showing an operation example of an image data acquisition unit provided in a gas leakage monitoring device according to the embodiment of the present disclosure.
FIG. 3 is a flowchart showing operation examples of an image processing unit, a vector generation unit, a filter unit, a frequency distribution generation unit, and a determination unit provided in the gas leakage monitoring device according to the embodiment of the present disclosure.
FIG. 4 is a flowchart of a subroutine of image processing performed by the image processing unit provided in the gas leakage monitoring device according to the embodiment of the present disclosure.
FIG. 5 is a diagram showing an example of an image represented by original image data according to the embodiment of the present disclosure.
FIG. 6 is a diagram showing an example of an image represented by processed image data according to the embodiment of the present disclosure.
FIG. 7 is a diagram showing an example of original image data and a first vector generated from the original image data according to the embodiment of the present disclosure.
FIG. 8 is a diagram showing an example of processed image data and a second vector generated from the processed image data according to the embodiment of the present disclosure.
FIG. 9 is a diagram showing an outline of filtering performed by the filter unit according to the embodiment of the present disclosure.
FIG. 10 is a diagram showing an example of processed image data and a vector extracted by filtering performed by the filter unit according to the embodiment of the present disclosure.
FIGS. 11A and 11B are examples showing histograms corresponding to a frequency distribution generated by the frequency distribution generation unit according to the embodiment of the present disclosure.
FIG. 12 is a schematic block diagram showing a configuration of a computer according to at least one embodiment.

### Description of Embodiments

Hereinafter, a gas leakage monitoring device, a gas leakage monitoring method, and a program according to an embodiment of the present disclosure will be described with reference to the drawings. In each drawing, the same or corresponding configurations will be described using the same reference numerals, and the description thereof will be omitted as appropriate.

### (System Configuration)

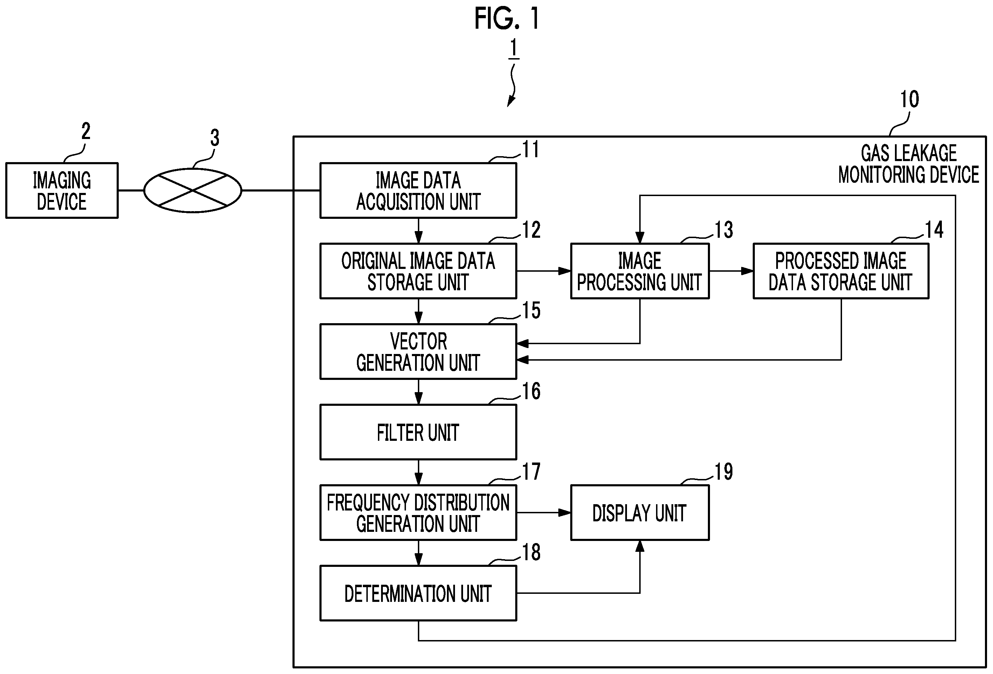

FIG. 1 is a block diagram showing a configuration of a gas leakage monitoring system 1 according to the embodiment of the present disclosure. The gas leakage monitoring system 1 includes an imaging device 2, a communication network 3, and a gas leakage monitoring device 10. In the gas leakage monitoring system 1, the gas to be monitored is assumed to be a CO2 gas. The communication network 3 is, for example, a communication network operated by a communication service provider, and is a communication network connectable by wire or wirelessly.

The imaging device 2 is, for example, an infrared camera including a filter that transmits infrared rays of 4.3 µm, which is an absorption wavelength band of the CO2 gas. An imaging target of the imaging device 2 is, for example, a field in which a plant or the like is installed. The imaging device 2 is mounted on, for example, an unmanned aerial vehicle (hereinafter referred to as UAV), and captures a video from the sky toward the field while moving together with the UAV. The imaging device 2 includes a communication device that is wirelessly connected to the communication network 3, and transmits video data generated by imaging to the gas leakage monitoring device 10 via the communication network 3.

### (Configuration of Gas Leakage Monitoring Device)

The gas leakage monitoring device 10 can be configured by using, for example, a computer such as a server, a personal computer, or a microcomputer, and a peripheral device of the computer, and includes, as a functional configuration configured by a combination of hardware of the computer or the like and software such as a program executed by the computer, an image data acquisition unit 11, an original image data storage unit 12, an image processing unit 13, a processed image data storage unit 14, a vector generation unit 15, a filter unit 16, a frequency distribution generation unit 17, a determination unit 18, and a display unit 19.

The image data acquisition unit 11 is connected to the communication network 3 by wire or wirelessly, and receives the video data transmitted by the imaging device 2. The video data received by the image data acquisition unit 11 includes frames arranged in the order of imaging, and time information indicating a captured time is associated with each frame. The image data acquisition unit 11 divides the frames included in the received video data in chronological order. The image data acquisition unit 11 generates original image data from each of the divided frames, and records the generated original image data in the original image data storage unit 12 in association with the time information associated with the frame corresponding to the original image data.

The image processing unit 13 performs predetermined image processing of emphasizing gas on the original image data recorded in the original image data storage unit 12 to generate processed image data corresponding to the original image data. The image processing unit 13 records the generated processed image data in the processed image data storage unit 14 in association with the time information associated with the original image data corresponding to the processed image data.

The vector generation unit 15 selects two pieces of original image data adjacent to each other in chronological order in the original image data storage unit 12. The vector generation unit 15 selects two pieces of processed image data corresponding to each of the two pieces of original image data to be selected. Here, specifically, the two pieces of processed image data corresponding to each of the two pieces of original image data are two pieces of processed image data associated with the same time information as the time information of each of the two pieces of original image data, and the two pieces of processed image data are also processed image data adjacent to each other in chronological order.

The vector generation unit 15 performs predetermined image processing of calculating a moving direction and a moving speed of an object included in the image on the selected two pieces of original image data, and generates a vector (hereinafter this vector is referred to as a first vector) indicating the moving direction and the moving speed for each pixel. The vector generation unit 15 performs predetermined image processing of calculating a moving direction and a moving speed of an object included in the image on the two pieces of selected processed image data, and generates a vector (hereinafter this vector is referred to as a second vector) indicating the moving direction and the moving speed for each pixel.

As the predetermined image processing of calculating the moving direction and the moving speed of the object included in the image, for example, processing of an optical flow of a Gunnar Farneback method in a flow estimation method is applied.

The filter unit 16 performs processing, referred to as filtering, of emphasizing and extracting a vector corresponding to gas from each of the second vectors on a pixel-by-pixel basis by using a first vector whose pixel corresponds to that of each second vector. The frequency distribution generation unit 17 classifies the vectors output by the filter unit 16 for each pixel into predetermined intervals of vector length, and generates a frequency distribution. The determination unit 18 determines the presence or absence of gas leakage based on a frequency of a predetermined interval in the frequency distribution generated by the frequency distribution generation unit 17 and a predetermined threshold value.

The display unit 19 is, for example, a display device such as a liquid crystal display, and displays a frequency distribution generated by the frequency distribution generation unit 17 as a histogram or displays a determination result of the determination unit 18.

### (Operation Example of Gas Leakage Monitoring Device)

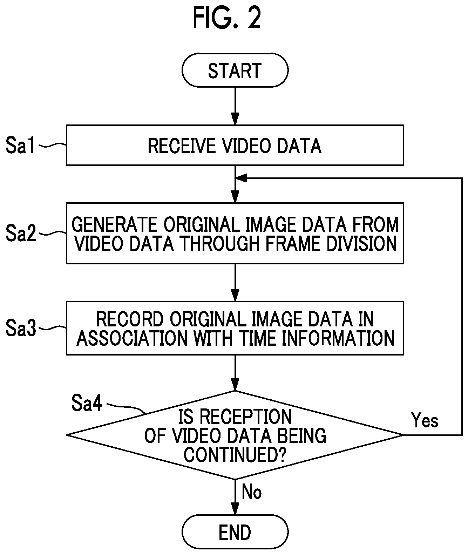

An operation example of the gas leakage monitoring device 10 will be described with reference to the flowcharts of FIGS. 2 to 4.

As shown in FIG. 2, the image data acquisition unit 11 receives the video data transmitted by the imaging device 2 (Sa1). The image data acquisition unit 11 sequentially divides the frames in order from the most recently received frame while continuing to receive the video data transmitted by the imaging device 2, and generates image data from the divided frames. The image data acquisition unit 11 performs noise removal processing on the generated image data. Here, the video data captured by the imaging device 2 is color video data, and the image data acquisition unit 11 converts the image data into grayscale image data to preserve the luminance of the noise-removed image data, and generates original image data. The pixel value of each pixel of the original image data is a value representing a luminance value in any value of 0 to 255 (Sa2).

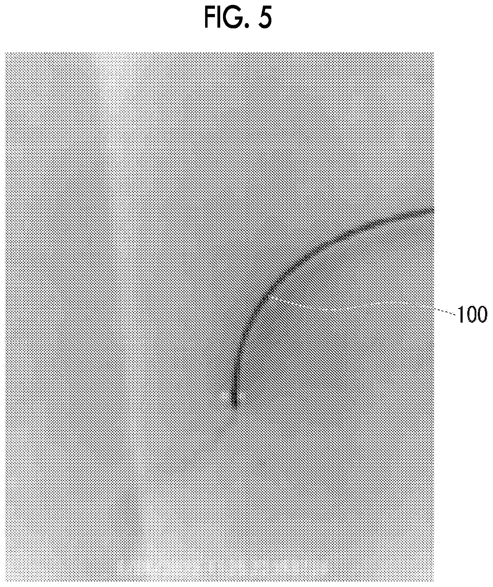

The image shown in FIG. 5 is an example of an image indicated by the original image data. In FIG. 5, an object indicated by reference numeral 100 is, for example, a structure that is fixedly installed in a plant or the like.

The image data acquisition unit 11 records the original image data in the original image data storage unit 12 in association with time information associated with a frame from which the original image data is generated (Sa3). The image data acquisition unit 11 determines whether or not the reception of the video data is continued (Sa4). In a case where it is determined that the reception of the video data is continued (Yes in Sa4), the image data acquisition unit 11 performs the processing of Sa2 on a frame that has not been divided. On the other hand, in a case where it is determined that the reception of the video data is not continued (No in Sa4), the image data acquisition unit 11 ends the processing.

The image data acquisition unit 11 may perform the processing of Sa2 and Sa3 by dividing one frame, and then perform the determination processing of Sa4, or may divide a certain number of frames, perform the processing of Sa2 and Sa3 on each of the divided frames, and then perform the determination processing of Sa4. Accordingly, the original image data storage unit 12 stores the original image data arranged in chronological order and associated with the time information.

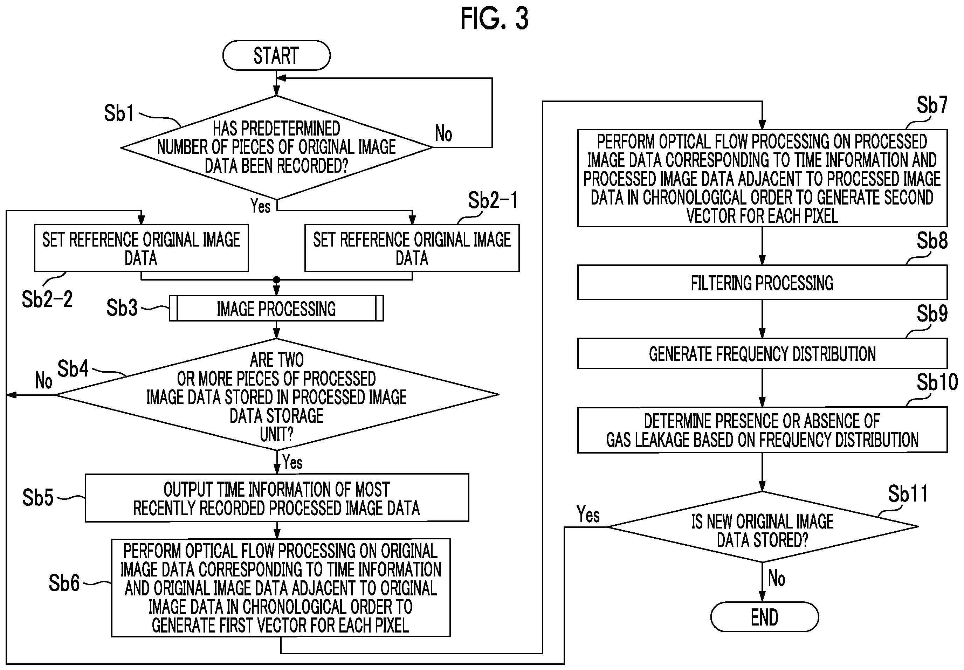

As shown in FIG. 3, the image processing unit 13 determines whether or not a predetermined number of pieces of original image data are recorded in the original image data storage unit 12 (Sb1). Here, the predetermined number is the number of pieces of original image data required to perform predetermined image processing of emphasizing gas performed by the image processing unit 13, and for example, a value of about "5" or "6" is determined in advance.

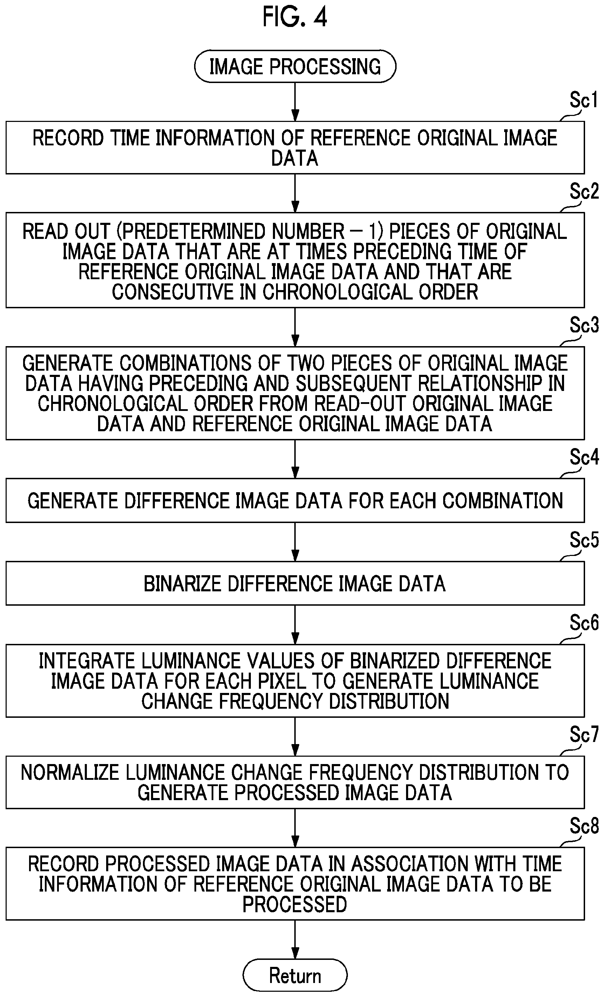

In a case where it is determined that the predetermined number of pieces of original image data are not recorded in the original image data storage unit 12 (No in Sb1), the image processing unit 13 performs the processing of Sb1 again. On the other hand, in a case where it is determined that the predetermined number of pieces of original image data are recorded in the original image data storage unit 12 (Yes in Sb1), the image processing unit 13 reads out, in the original image data storage unit 12, the original image data recorded in the (predetermined number)th position and the time information associated with the original image data from the original image data storage unit 12. The image processing unit 13 sets the read-out original image data as reference original image data (Sb2-1). In a case where the reference original image data is determined, the image processing unit 13 starts a subroutine of the image processing shown in FIG. 4, which is the above-described predetermined image processing of emphasizing the gas (Sb3).

### (Predetermined Image Processing of Emphasizing Gas by Image Processing Unit)

The image processing unit 13 records the time information corresponding to the reference original image data, which is read out together with the reference original image data, in an internal storage area (Sc1). The image processing unit 13 reads out, from the original image data storage unit 12, (predetermined number - 1) pieces of original image data that are at times preceding the time indicated by the time information corresponding to the reference original image data and that are consecutive in chronological order (Sc2). Since the processing of Sc2 is performed after the processing of Sb1, in a case where the processing of Sc2 is performed, at least (predetermined number - 1) pieces of original image data at times preceding the reference original image data in chronological order are stored in the original image data storage unit 12.

Here, the definitions of the terms "preceding time" and "subsequent time" will be described. For example, it is assumed that there are three pieces of original image data associated with three pieces of time information indicating "00:00:01", "00:00:02", and "00:00:03". In this case, the original image data associated with the time information indicating a time preceding the time indicated by the time information associated with the original image data at "00:00:02" is the original image data at "00:00:01". On the other hand, the original image data associated with the time information indicating a time subsequent to the time indicated by the time information associated with the original image data at "00:00:02" is the original image data at "00:00:03". The definitions of the terms "preceding time" and "subsequent time" are the same in the following description.

The image processing unit 13 generates combinations of two pieces of original image data having a preceding and subsequent relationship in chronological order from a predetermined number of pieces of original image data including the read-out original image data and reference original image data (Sc3). Here, "having a preceding and subsequent relationship in chronological order" does not require the two pieces of original image data to be consecutive in chronological order, and it is sufficient that the two pieces of original image data simply have a preceding and subsequent relationship in chronological order. Therefore, the image processing unit 13 generates a predetermined number C2 of combinations.

The image processing unit 13 performs the following processing for each combination to generate difference image data for each combination. The image processing unit 13 reads out the luminance values of the pixels at the same position in the two pieces of original image data included in one combination, and performs processing of setting an absolute value of a difference between the two read-out luminance values as the luminance value of the pixel at the position of the difference image data. The image processing unit 13 performs the processing for all the pixels to generate difference image data corresponding to the combination (Sc4).

The image processing unit 13 performs processing of binarizing the luminance values of the pixels for each of the generated difference image data for each combination. The image processing unit 13 compares each of the luminance values of all the pixels of the difference image data with a predetermined threshold value, and performs binarization processing of setting the luminance value of the pixel to "1" in a case where the luminance value is equal to or greater than the threshold value, and setting the luminance value of the pixel to "0" in a case where the luminance value is less than the threshold value (Sc5).

The image processing unit 13 integrates the luminance values for each pixel of all the binarized difference image data as shown in Equation (1) below, and calculates a luminance change frequency which is the sum of the integrated luminance values (Sc6).
[Equation 1] $S \left(x, y\right) = {\sum }_{t} {l}_{t} \left(x, y\right)$

In Equation (1), S(x, y) is a luminance change frequency of the integrated pixel (x, y), and lt(x, y) is a luminance value of the pixel (x, y) in the t-th difference image data. The image processing unit 13 detects the maximum value of the luminance change frequency S(x, y) in the luminance change frequency distribution indicating the luminance change frequency of all the generated pixels, and normalizes the luminance change frequency S(x, y) of each pixel of the luminance change frequency distribution such that the maximum value is a predetermined value, for example, "255". Specifically, the image processing unit 13 performs normalization by dividing the luminance change frequency S(x, y) of each pixel in the luminance change frequency distribution by the maximum value of the luminance change frequency S(x, y) in the luminance change frequency distribution and multiplying the result by a predetermined value (Sc7).

For example, in a case where the predetermined value is "255", the pixel value of the pixel included in the normalized luminance change frequency distribution is a value between 0 and 255. In a case where the pixel value is regarded as the luminance value, the normalized luminance change frequency distribution is grayscale image data including the same number of pixels as the pixels of the original image data. Therefore, the normalized luminance change frequency distribution is hereinafter referred to as processed image data.

The image processing unit 13 reads out the time information associated with the reference original image data stored in the internal storage area. The image processing unit 13 records the read-out time information in the processed image data storage unit 14 in association with the processed image data (Sc8), and ends the processing of the subroutine.

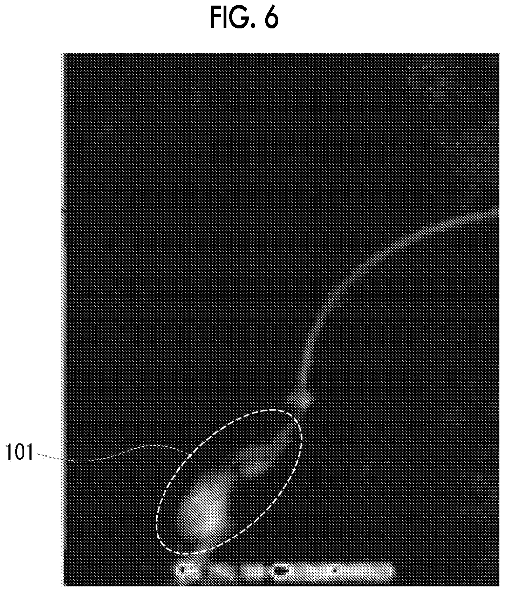

The image shown in FIG. 6 is an example of an image indicated by the processed image data obtained in a case where the original image data of FIG. 5 is used as the reference original image data. In FIG. 6, a pixel in which the luminance value shown in a region indicated by the reference numeral 101 is present is a pixel indicating gas. It can be seen that the gas, which has a small difference from the luminance value of the background and is unclear in the image of the original image data of FIG. 5, is emphasized and clarified in the image of the processed image data shown in FIG. 6.

Returning to FIG. 3, the image processing unit 13 determines whether or not two or more pieces of processed image data are stored in the processed image data storage unit 14 (Sb4). In a case where the image processing unit 13 determines that two or more pieces of processed image data are not stored in the processed image data storage unit 14 (No in Sb4), the image processing unit 13 reads out, from the original image data storage unit 12, the original image data associated with the time information indicating a time immediately subsequent to the time indicated by the time information stored in the internal storage area, and the time information associated with the original image data. The image processing unit 13 uses the read-out original image data as the reference original image data (Sb2-2). In a case where the reference original image data is determined, the image processing unit 13 starts the subroutine of the image processing shown in FIG. 4, which is the processing of Sb3, again.

In a case where the image processing unit 13 determines that two or more pieces of processed image data are stored in the processed image data storage unit 14 (Yes in Sb4), the image processing unit 13 outputs the time information associated with the processed image data recorded in the processed image data storage unit 14 most recently to the vector generation unit 15 (Sb5).

The vector generation unit 15 takes in the time information output by the image processing unit 13. The vector generation unit 15 reads out, from the original image data storage unit 12, original image data corresponding to the taken-in time information, and original image data that is adjacent to the original image data in chronological order and that corresponds to a time preceding the time indicated by the taken-in time information. The vector generation unit 15 performs optical flow processing on the two read-out pieces of original image data to generate a first vector that is a vector indicating the moving direction and moving speed of each pixel (Sb6). Since the processing of Sb6 is performed after the processing of Sb1 and Sb4, in a case where the processing of Sb6 is performed, at least one or more pieces of original image data at a time preceding the time of the original image data corresponding to the time information are stored in the original image data storage unit 12.

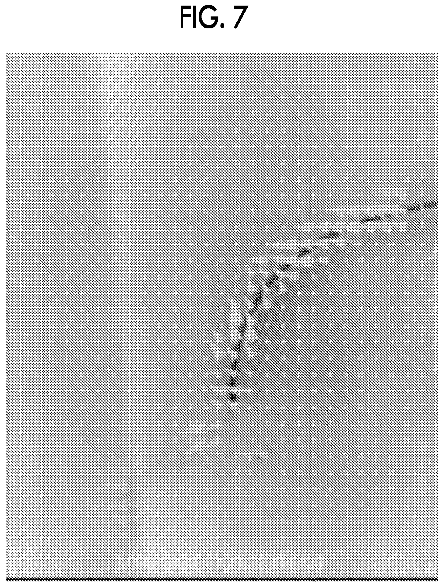

The image shown in FIG. 7 is a diagram in which the first vector obtained by performing the optical flow processing on the original image data shown in FIG. 5 and original image data adjacent to the original image data in chronological order is superimposed on the image of the original image data shown in FIG. 5. The first vector is obtained for each pixel, but in FIG. 7, in order to make the first vector easy to see, the first vector for each pixel spaced at regular intervals is shown.

The vector generation unit 15 reads out, from the processed image data storage unit 14, processed image data corresponding to the taken-in time information, and processed image data that is adjacent to the processed image data in chronological order and that corresponds to a time preceding the time indicated by the taken-in time information. In this way, by reading out the processed image data, the vector generation unit 15 reads out, from the processed image data storage unit 14, two pieces of processed image data associated with the same time information as the time information of each of the two pieces of original image data read out by the vector generation unit 15 in the processing of Sb6, that is, two pieces of processed image data corresponding to each of the two pieces of original image data.

The vector generation unit 15 performs the same processing as the optical flow processing performed in the processing of Sb6 on the two read-out pieces of processed image data to generate a second vector, which is a vector indicating the moving direction and the moving speed of each pixel.

The vector generation unit 15 associates, with each of the generated second vectors and each of the first vectors generated in the processing of Sb6, information indicating the position of the pixel corresponding to each, and outputs the second vectors and the first vectors to the filter unit 16 (Sb7). Since the processing of Sb7 is performed after the processing of Sb4, when the processing of Sb7 is performed, at least one or more pieces of processed image data at a time preceding the time of the processed image data corresponding to the time information are stored in the processed image data storage unit 14.

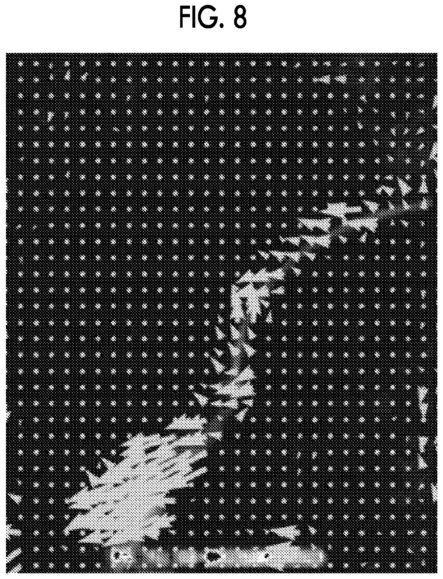

The image shown in FIG. 8 is a diagram in which the second vector obtained by performing the optical flow processing on the processed image data shown in FIG. 6 and processed image data adjacent to the processed image data in chronological order is superimposed on the image of the processed image data shown in FIG. 6. The second vector is obtained for each pixel, but in FIG. 8, in order to make the second vector easy to see, the second vector for each pixel spaced at regular intervals is shown. As can be seen from the image shown in FIG. 7 and the image shown in FIG. 8, in FIG. 7, the first vector indicating the moving direction and the moving speed of the gas is hardly shown, but in FIG. 8, the second vector indicating the moving direction and the moving speed of the gas is shown in large numbers.

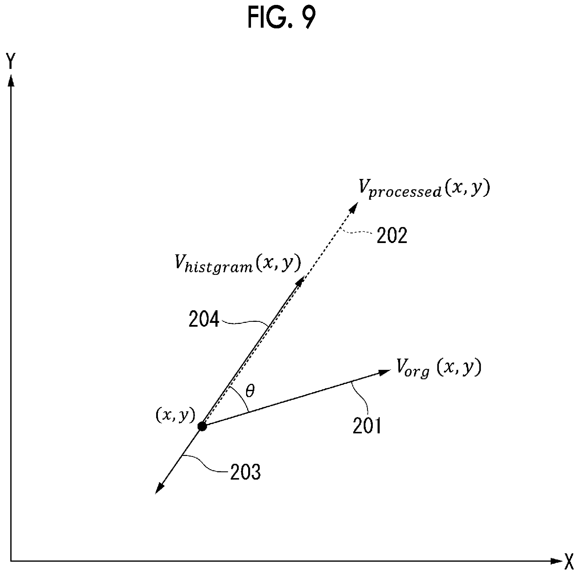

The filter unit 16 takes in the first vector and the second vector, which are associated with the information indicating the position of the pixel output by the vector generation unit 15. The filter unit 16 selects the first vector and the second vector whose pixels correspond to each other, and performs processing of filtering the second vector using the first vector for each pixel. For example, as shown in FIG. 9, it is assumed that the first vector at the pixel (x, y) is a vector V_{org}(x, y) of a solid line arrow indicated by reference numeral 201, and the second vector at the same pixel (x, y) is a vector V_{processed}(x, y) of a broken line arrow indicated by reference numeral 202. Here, an angle formed by the vector V_{org}(x, y) 201 and the vector V_{processed}(x, y) 202 is represented by "θ". Here, θ is an angle between 0° and 180°.

In this case, the filter unit 16 performs filtering to calculate a vector V_{histogram} (x, y) 204 having a length calculated by the following Equation (2) and having the same direction as the vector V_{processed} (x, y) 202, which is the second vector. Here, in a case where the length calculated by Equation (2) is a negative value, the direction of the vector V_{histogram} (x, y) 204 is opposite to the direction of the vector V_{processed} (x, y) 202.
[Equation 2] $\left‖{V}_{histogram}\left(x, y\right)\right‖ = \left‖{V}_{processed}\left(x, y\right)\right‖ - \left‖{V}_{org}\left(x, y\right)\right‖ \times cos \frac{θ}{2}$

The filtering performed by the filter unit 16 will be described using the vector as follows. The filter unit 16 calculates a multiplication value obtained by multiplying the norm of the vector V_{org}(x, y) 201, which is the first vector, by cos(θ/2), as shown in the second term on the right side of Equation (2). As shown in FIG. 9, the filter unit 16 determines a vector 203 having a direction opposite to the direction of the vector V_{processed}(x, y) 202, which is the second vector, with the calculated multiplication value as the length. The filter unit 16 adds the determined vector 203 and the vector V_{processed}(x, y) 202 to calculate the vector V_{histogram}(x, y) 204.

Since the gas is unclearly shown in the original image data, the first vector shown in FIG. 7 mainly becomes a vector indicating the moving direction and the moving speed of a calculation target point for which optical flow is calculated and which corresponds to a fixed object such as a structure. The fixed object is not limited to the structure installed in the plant or the like, and includes objects such as soil, sand, and grass. The vector of the calculation target point corresponding to the fixed object is a vector generated by the imaging device 2 performing imaging while moving. Therefore, most of the first vectors are vectors that depend on the moving direction and the moving speed of the imaging device 2.

On the other hand, the second vector shown in FIG. 8 becomes a vector including a vector indicating a moving direction and a moving speed of a calculation target point corresponding to a fixed object, and a vector indicating a moving direction and a moving speed of a calculation target point corresponding to diffusing gas. The direction and the speed at which the gas diffuses are also affected by the pressure applied to the gas, the direction in which the gas is discharged, the strength and the direction of the wind around the gas, and the like. Therefore, the vector indicating the moving direction and the moving speed of the gas in the second vector becomes a vector obtained by combining a vector dependent on the moving direction and the moving speed of the imaging device 2 and a vector generated by influences other than the moving direction and the moving speed of the imaging device 2.

The purpose of the filtering performed by the filter unit 16 is to remove the vector of the calculation target point corresponding to the fixed object and to further emphasize the vector of the calculation target point corresponding to the gas. In order to achieve the purpose of removing the former vector of the calculation target point corresponding to the fixed object, it is sufficient to subtract the first vector from the second vector of the same pixel. However, in the first vector, in a case where the calculation target point corresponding to the fixed object is present in the pixel in which the gas is present, simply subtracting the first vector from the second vector has a drawback of reducing the length of the vector of the calculation target point corresponding to the gas. Therefore, in Equation (2), the norm of the vector V_{org}(x, y), which is the first vector, is multiplied by cos(θ/2).

In a case where θ = 0°, since the first vector and the second vector face the same direction, it is presumed that both the first vector and the second vector are the vectors of the calculation target point corresponding to the fixed object. Since cos(θ/2) becomes "1" in a case where θ = 0°, the first vector is subtracted from the second vector as is. Therefore, it is possible to remove the vector of the calculation target point corresponding to the fixed object from the second vector.

As θ, which is the angle formed by the first vector and the second vector, increases, it is presumed that the elements of the vector of the calculation target point corresponding to the gas in the second vector increase. cos(θ/2) decreases as θ increases, and becomes "0" at θ = 180°. Therefore, as the elements of the vector of the calculation target point corresponding to the gas in the second vector increase, the influence of the first vector can be reduced, and the vector of the calculation target point corresponding to the gas included in the second vector can be emphasized. Therefore, the vector V_{histogram}(x, y) 204 calculated for each pixel by the filter unit 16 can be said to be a vector extracted by emphasizing the vector of the calculation target point corresponding to the gas while removing the vector of the calculation target point corresponding to the fixed object from the second vector.

In the following description, the vector of the calculation target point corresponding to the fixed object is simply referred to as a vector corresponding to the fixed object, and the vector of the calculation target point corresponding to the gas is simply referred to as a vector corresponding to the gas.

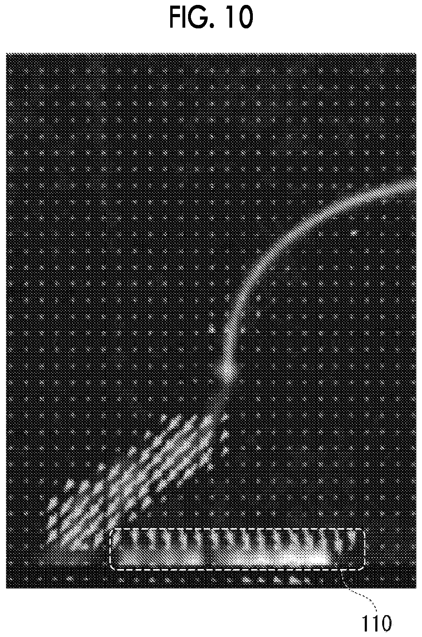

The image shown in FIG. 10 is an image in which the vector V_{histogram}(x, y) 204 for each pixel calculated by the filter unit 16 performing the filtering using Equation (2) on the first vector shown in FIG. 7 and the second vector shown in FIG. 8 is superimposed on the image of the processed image data shown in FIG. 6. As can be seen from the image shown in FIG. 10, it can be seen that, by the filtering by the filter unit 16, the vector in the vicinity of the region where the structure is present is removed, and the vector in the vicinity of the region where the gas is present is mainly extracted.

The filter unit 16 associates the vector for each pixel calculated by the filtering with information indicating the position of the pixel. In the optical flow processing, there is a possibility that a vector with a large detection error in the moving speed and low reliability is calculated for the pixels of the outer edge portion of the image. In addition, in the image shown in FIG. 10, as in a region indicated by reference numeral 110, information indicating the index of the image may be included in the outer edge portion of the image. Therefore, the filter unit 16 excludes the vector of the outer edge portion based on the information indicating the position of the pixel associated with the vector. The filter unit 16 outputs the vector excluding the vector of the outer edge portion to the frequency distribution generation unit 17 (Sb8).

The frequency distribution generation unit 17 takes in the vectors output by the filter unit 16. The frequency distribution generation unit 17 classifies the taken-in vectors into each predetermined interval of the vector length, and counts the number of vectors for each interval. The frequency distribution generation unit 17 calculates, as a frequency of each interval, a ratio of the number of vectors in each interval as a numerator to the total number of taken-in vectors as a denominator, and generates a frequency distribution based on the frequency of each interval. The frequency distribution generation unit 17 generates a histogram from the generated frequency distribution data, and displays the generated histogram on the display unit 19.

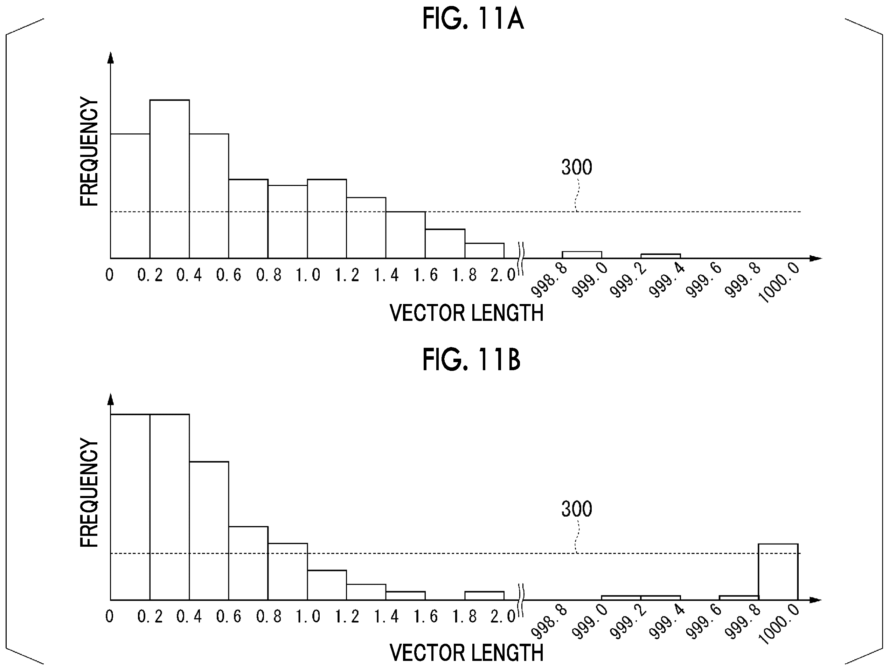

FIGS. 11A and 11B are examples of the histograms displayed on the display unit 19 by the frequency distribution generation unit 17. In FIGS. 11A and 11B, the vertical axis indicates the frequency, and the horizontal axis indicates the spacing of the predetermined intervals of the vector length in the frequency distribution generation unit 17. FIGS. 11A and 11B show examples of intervals in which a single interval length is set to "0.2" as predetermined intervals of the vector length in the frequency distribution generation unit 17.

The frequency distribution generation unit 17 outputs the generated frequency distribution data to the determination unit 18 (Sb9). The determination unit 18 takes in the frequency distribution data output by the frequency distribution generation unit 17. In the determination unit 18, a predetermined interval, which is an index for determining the presence or absence of gas leakage, and a threshold value indicated by reference numeral 300 in FIGS. 11A and 11B are determined in advance. Here, the interval that is the index for determining the presence or absence of gas leakage is an interval equal to or larger than a predetermined vector length from an empirical value or the like, and here, the interval is an interval in which the length of the vector is "999.8" or more.

The determination unit 18 detects the frequency of each interval in which the length of the vector in the taken-in frequency distribution data is "999.8" or more, and determines whether or not any of the detected frequencies is equal to or larger than the threshold value. In a case where the determination unit 18 determines that any of the detected frequencies is equal to or larger than the threshold value, for example, the determination unit 18 displays a character string "gas leakage present" as a determination result in a superimposed manner on the histogram displayed on the display unit 19. In a case where the determination unit 18 determines that none of the detected frequencies is equal to or larger than the threshold value, for example, the determination unit 18 displays a character string "gas leakage absent" as a determination result in a superimposed manner on the histogram displayed on the display unit 19.

FIG. 11A is an example of a histogram in a case of an image obtained by imaging a point where gas leakage has not occurred, and FIG. 11B is an example of a histogram in a case of an image obtained by imaging a point where gas leakage has occurred. In FIG. 11A, it is assumed that the frequency of each interval in which the length of the vector is "999.8" or more does not exceed the threshold value indicated by reference numeral 300. On the other hand, in FIG. 11B, the frequency of at least the interval of "999.8 to 1000.0" exceeds the threshold value indicated by reference numeral 300. Therefore, in the case of FIG. 11A, the determination unit 18 determines that none of the detected frequencies is equal to or larger than the threshold value, and displays "gas leakage absent" on the display unit 19. In the case of FIG. 11B, the determination unit 18 determines that any of the detected frequencies is equal to or larger than the threshold value, and displays "gas leakage present" on the display unit 19.

After the determination, the determination unit 18 outputs an instruction signal indicating that the processing is continued to the image processing unit 13 (Sb10). In a case where the image processing unit 13 receives the instruction signal indicating that the processing is continued from the determination unit 18, the image processing unit 13 determines whether or not new original image data associated with time information indicating a time subsequent to the time information of the reference original image data stored in the internal storage area is stored in the original image data storage unit 12 (Sb11).

In a case where the image processing unit 13 determines that the new original image data is stored in the original image data storage unit 12 (Yes in Sb11), the image processing unit 13 performs the processing of Sb2-2 again. In a case where the image processing unit 13 determines that the new original image data is not stored in the original image data storage unit 12 (No in Sb11), the image processing unit 13 ends the processing.

### (Operations and Effects)

In the gas leakage monitoring device 10 according to the above-described embodiment, the image data acquisition unit 11 divides frames of a video captured by the imaging device 2 while moving to generate original image data. The image processing unit 13 performs predetermined image processing of emphasizing the gas on the original image data to generate processed image data. The vector generation unit 15 selects two pieces of original image data adjacent to each other in chronological order and two pieces of processed image data corresponding to the two pieces of original image data, performs predetermined image processing of calculating the moving direction and the moving speed of the object included in the image for each of the combination of the original image data and the combination of the processed image data, and generates the first vector for each pixel and the second vector for each pixel. The filter unit 16 performs filtering of emphasizing and extracting the vector corresponding to the gas with respect to the second vector corresponding to each of the pixels using the first vector corresponding to each of the pixels. The frequency distribution generation unit 17 classifies the extracted vectors for each interval to generate the frequency distribution. The determination unit 18 determines the presence or absence of gas leakage for each image using the frequency of each of the predetermined intervals, for example, intervals equal to or larger than a predetermined vector length, and a predetermined threshold value.

Since the gas is unclearly shown in the original image data, the first vector generated from the original image data mainly becomes a vector corresponding to the fixed object such as the structure. On the other hand, since the gas is emphasized in the processed image data, the second vector generated from the processed image data includes the vector corresponding to the fixed object such as the structure and the vector corresponding to the gas. By using a difference between the first vector generated from the original image data and the second vector generated from the processed image data, the vector corresponding to the gas can be emphasized and extracted from the second vector by filtering the second vector using the first vector. In the vector extracted in this way, the vector corresponding to the gas is emphasized, and thus the vector has a certain length. Therefore, the frequency distribution can be generated from the extracted vector, and the presence or absence of the gas leakage can be determined based on the magnitude of the frequency of the interval including the vector corresponding to the gas in the generated frequency distribution.

In the technique disclosed in PTL 1, since it is premised that the gas is shown in the captured image, in a case where the gas is not shown in the captured image, the gas leakage monitoring device 10 can more accurately indicate the presence or absence of the gas leakage. In the gas leakage monitoring device 10, in the predetermined image processing of emphasizing the gas by the image processing unit 13, three or more pieces of image data may be used, but in the processing from the vector generation unit 15 onward, only two pieces of original image data and two pieces of processed image data are used as the image data, and it is not necessary to increase the number of pieces of image data in order to improve the accuracy as in the technique disclosed in PTL 1. Therefore, the gas leakage monitoring device 10 of the above-described embodiment can indicate the presence or absence of the gas leakage with higher accuracy in a shorter time than in the method disclosed in PTL 1.

### (Other Configuration Examples of Embodiment)

Although the embodiments of the present disclosure have been described in detail above with reference to the drawings, the specific configurations are not limited to these embodiments, and designs or the like within a scope which does not depart from the gist of the present disclosure are also included.

### (Case Where Gas Is Clearly Shown in Original Image Data)

In a case where a difference between a temperature of the fixed object such as the structure and a temperature of the gas is small, the gas is unclearly shown in the original image data generated by the imaging performed by the imaging device 2, and the vector corresponding to the gas can be extracted by filtering the vector corresponding to the fixed object by using the gas leakage monitoring device 10 of the above-described embodiment. On the other hand, in a case where the difference between the temperature of the fixed object and the temperature of the gas is large, the gas is clearly shown in the original image data generated by the imaging performed by the imaging device 2.

In this case, even in a case where the predetermined image processing of emphasizing the gas by the image processing unit 13 is not performed, the vector generation unit 15 also includes the vector corresponding to the gas in the first vector generated from the original image data. Therefore, the gas leakage monitoring device 10 may not include the image processing unit 13, the processed image data storage unit 14, and the filter unit 16. In this case, the processing of Sb1 to Sb5 in FIG. 3 is not performed, and in a case where the vector generation unit 15 detects that at least two or more pieces of original image data are recorded in the original image data storage unit 12 by the image data acquisition unit 11, the vector generation unit 15 performs the processing of Sb6 in FIG. 3 to generate the first vector, and skips the processing of Sb7 of generating the second vector. The processing of Sb8 is also skipped, and the frequency distribution generation unit 17 takes in the first vector generated by the vector generation unit 15 instead of the vector calculated and output by the filter unit 16, performs the processing of Sb9 on the taken-in first vector, and thereafter, the processing from Sb10 onward is performed. The processing of Sb11 is performed by the vector generation unit 15, and in a case where a determination of "Yes" is made, the processing of Sb6 is performed on the original image data at a time immediately subsequent to that of the original image data to be processed in the previous Sb6 processing.

However, the first vector generated by the vector generation unit 15 includes the vector corresponding to the fixed object and the vector corresponding to the gas. Therefore, even in a case where the first vector is classified for each predetermined interval of the vector length, and a frequency distribution in which the number of vectors for each interval is used as the frequency is generated, the frequency of the frequency distribution is the frequency including the vector corresponding to the fixed object. Therefore, in a case where a difference between the length of the vector corresponding to the fixed object and the length of the vector corresponding to the gas is small, it is difficult to determine the presence or absence of the gas leakage.

Meanwhile, the moving speed of the fixed object in the image substantially matches the moving speed of the imaging device 2. Therefore, in a case where the moving speed of the imaging device 2 is constant, the range of the interval of the frequency distribution corresponding to the moving speed can be specified. Therefore, the determination unit 18 can determine the presence or absence of the gas leakage for each image by using, for example, the frequency of each interval that excludes the specified interval range and that is equal to or larger than the predetermined vector length, and the predetermined threshold value.

In addition, even in a case where the moving speed of the imaging device 2 is not constant, in a case where there is a large difference between the moving speed of the imaging device 2 and the speed at which the gas diffuses, the difference between the length of the vector corresponding to the fixed object and the length of the vector corresponding to the gas is large. Therefore, in the frequency distribution generated by the frequency distribution generation unit 17, a large difference occurs between the interval in which the vector corresponding to the fixed object is shown and the interval in which the vector corresponding to the gas is shown. In this case, in a case where the range of the interval in which the vector corresponding to the gas is shown can be specified, the determination unit 18 can determine the presence or absence of the gas leakage for each image by using the frequency of each interval in the range of the specified interval and the predetermined threshold value.

Therefore, in a case where the gas is clearly shown in the original image data, it is not necessary to perform the predetermined image processing of emphasizing the gas by the image processing unit 13, and thus the time required for this processing decreases. In the processing from the vector generation unit 15 onward, only two pieces of original image data are used as the image data, and it is not necessary to increase the number of pieces of image data to improve the accuracy as in the technique disclosed in PTL 1. Therefore, even in a case where the gas is clearly shown in the original image data, the presence or absence of the gas leakage can be shown with higher accuracy in a shorter time than in the method disclosed in PTL 1.

### (Case Where Imaging Device Is Fixed (1))

In the above-described embodiment, the imaging device 2 is mounted on, for example, the UAV and moved. On the other hand, in a case where the imaging device 2 is fixed and imaging is performed, such as in fixed-point observation, a fixed object such as a structure does not move in the image as long as the imaging device 2 is not shaken by the wind. Therefore, even in a case where the optical flow processing is performed, a vector is not generated. Therefore, in this case, the gas leakage monitoring device 10 may not include the filter unit 16, and the vector generation unit 15 may not generate the first vector. In a case where the second vector generated by the vector generation unit 15 is classified for each predetermined interval of the vector length instead of the vector output by the filter unit 16, and the frequency distribution generation unit 17 generates the frequency distribution in which the number of vectors for each interval is used as the frequency, the determination unit 18 can determine the presence or absence of the gas leakage for each image from the frequency distribution. In this case, in the processing from the vector generation unit 15 onward, only two pieces of processed image data are used as the image data, and it is not necessary to increase the number of pieces of image data to improve the accuracy as in the technique disclosed in PTL 1. Therefore, even in a case where the imaging device 2 is fixed, the presence or absence of the gas leakage can be shown with higher accuracy in a shorter time than in the method disclosed in PTL 1.

### (Case Where Imaging Device Is Fixed (2))

It is assumed that the imaging device 2 is fixed, further, a difference between a temperature of a fixed object such as a structure and a temperature of the gas is large, and the gas is clearly shown in the original image data generated by the imaging performed by the imaging device 2. In this case, the gas leakage monitoring device 10 may not include the image processing unit 13, the processed image data storage unit 14, and the filter unit 16, and the vector generation unit 15 may generate the first vector from the original image data stored in the original image data storage unit 12 and may not generate the second vector. The first vector mainly includes a vector corresponding to the gas. In a case where the first vector is classified for each predetermined interval of the vector length instead of the second vector, and the frequency distribution generation unit 17 generates the frequency distribution in which the number of vectors for each interval is used as the frequency, the determination unit 18 can determine the presence or absence of the gas leakage for each image from the frequency distribution.

In a case where the gas is clearly shown in the original image data, it is not necessary to perform the predetermined image processing of emphasizing the gas by the image processing unit 13, and thus the time required for this processing decreases. In the processing from the vector generation unit 15 onward, only two pieces of original image data are used as the image data, and it is not necessary to increase the number of pieces of image data to improve the accuracy as in the technique disclosed in PTL 1. Therefore, even in a case where the imaging device 2 is fixed and the gas is clearly shown in the original image data, the presence or absence of the gas leakage can be shown with higher accuracy in a shorter time than in the method disclosed in PTL 1.

### (Configuration Example Not Including Determination Unit)

In the above-described embodiment, the frequency distribution generation unit 17 generates the frequency distribution, and then the determination unit 18 determines the presence or absence of the gas leakage by using the generated frequency distribution. On the other hand, without providing the determination unit 18, a person may refer to the frequency of each of the predetermined intervals, for example, intervals equal to or larger than the predetermined vector length, in the histogram displayed on the display unit 19 by the frequency distribution generation unit 17, to determine the presence or absence of gas leakage. In this case, a person can also determine the presence or absence of the gas leakage by comparing the frequency with the threshold value, or can also determine the presence or absence of the gas leakage from a difference in relative magnitude of the frequency of each interval. Therefore, in a case where the presence or absence of gas leakage is determined from the latter difference in relative magnitude of the frequency of each interval, the frequency distribution generation unit 17 may display the histogram by using the number of vectors of each interval as the frequency as is, instead of calculating, as the frequency of each interval, a ratio of the number of vectors of each interval as a numerator to the total number of taken-in vectors as a denominator.

### (Other Configuration Examples)

In the above-described embodiment, the image data acquisition unit 11 records the original image data in the original image data storage unit 12 in association with time information associated with a frame from which the original image data is generated. On the other hand, the image data acquisition unit 11 may record the original image data in the original image data storage unit 12 by sequentially assigning, for example, consecutive numbers starting from 1 in the order of division, instead of associating the time information with the original image data. In this case, the processing performed by the image processing unit 13 and the vector generation unit 15 thereafter uses the assigned numbers instead of the time information. Specifically, in the processing of Sc2 in FIG. 4, the image processing unit 13 specifies the original image data in a case of generating the processed image data based on the assigned numbers, and reads out the original image data from the original image data storage unit 12. In the processing of Sb6 and Sb7 in FIG. 3, the vector generation unit 15 reads out, from the original image data storage unit 12 and the processed image data storage unit 14, respectively, the original image data and the processed image data to which a number received from the image processing unit 13 is assigned.

In the above-described embodiment, the imaging device 2 captures a video. On the other hand, the imaging device 2 may capture still images at different times, associate the time information indicating the captured time with the data of the still images, and transmit the still images to the image data acquisition unit 11. However, the interval between different times at which imaging is performed needs to be sufficient to generate, by optical flow processing, a vector corresponding to an object moving in the image, and it is preferable that the different times be temporally consecutive, such as in video capturing. In addition, instead of the imaging device 2 associating time information with still image data, as described above, consecutive numbers starting from 1 may be associated with the image data in the order in which the image data acquisition unit 11 receives the image data.

In the above-described embodiment, the predetermined image processing of emphasizing the gas performed by the image processing unit 13 is not limited to the image processing shown in FIG. 4, and may be, for example, image processing in which a luminance value range of the gas, for example, 100 to 150, is set as it is among the luminance values of 0 to 255 of the original image data which is a grayscale, and the luminance values of the remaining pixels are set to "0" or "255". Further, the image processing may be image processing of adjusting the contrast such that the gas is emphasized.

In the above-described embodiment, the vector generation unit 15 selects two pieces of original image data adjacent to each other in chronological order from the original image data storage unit 12, and selects two pieces of processed image data adjacent to each other in chronological order from the processed image data storage unit 14. On the other hand, the vector generation unit 15 may not necessarily select adjacent pieces of data. For example, in a case where a sufficient number of pieces of original image data are stored in the original image data storage unit 12 and a sufficient number of pieces of processed image data are stored in the processed image data storage unit 14, the vector generation unit 15 may select one piece of original image data corresponding to the time information output by the image processing unit 13, and then select, as the other piece of original image data, original image data preceding the selected one piece of original image data by a predetermined time in chronological order. In this case, the vector generation unit 15 selects two pieces of processed image data associated with the time information of each of the selected two pieces of original image data from the processed image data storage unit 14. The predetermined time may be determined in advance or may be changed for each selection, but it is preferable that the predetermined time be determined to be a time at which the imaging ranges of the two pieces of original image data do not significantly differ from each other.

In the above-described embodiment, the vector generation unit 15 takes in the time information output by the image processing unit 13 in the processing of Sb5 in FIG. 3, and selects and reads out the original image data and the processed image data corresponding to the taken-in time information in the processing of Sb6 and Sb7. On the other hand, the original image data may not be selected according to the time information while the range captured by the imaging device 2 does not significantly change, that is, while the position of the fixed object such as the structure does not change significantly. For example, in a case where the vector generation unit 15 calculates the first vector by performing the processing of Sb6 once, the vector generation unit 15 may skip the processing of Sb6 by the number of times corresponding to the period during which the range captured by the imaging device 2 does not significantly change, and may output the most recently generated first vector in a case where the first vector is output to the filter unit 16 in the processing of Sb7.

In the above-described embodiment, the optical flow processing by the Gunnar Farneback method among flow estimation methods is shown as an example of the predetermined image processing of calculating the moving direction and moving speed of the object included in the image performed by the vector generation unit 15, but any optical flow method may be applied, or processing other than the optical flow may be applied.

In the above-described embodiment, the filter unit 16 performs the filtering by Equation (2). On the other hand, instead of cos(θ/2) in Equation (2), a function other than cos(θ/2) may be applied, which calculates a ratio that is 100% in a case where an angle formed by the second vector and the first vector having the same pixel position as the second vector is 0°, and whose percentage value approaches 0% as the angle approaches 180°.

In the above-described embodiment, the gas is CO2 gas, but may be, for example, a gas having infrared rays as an absorption wavelength band, such as methane or ammonia, or may be a gas having an absorption wavelength band other than the infrared region. In a case where a gas other than the CO2 gas is an imaging target, the imaging device 2 includes a filter that transmits the absorption wavelength band of the gas.

In the above-described embodiment, when generating the difference image data in the processing of Sc4 in FIG. 4, in a case where the imaging ranges of the two pieces of original image data included in the combination are different from each other, the image processing unit 13 may perform registration such that the imaging ranges match each other, and then generate the difference image data. The method of performing the registration may be a method of detecting a calculation target point common to the two pieces of original image data and changing the coordinates such that the positions of the common calculation target points match each other, or another method may be applied.

In the above-described embodiment, the image data acquisition unit 11 performs the noise removal processing and the processing of converting the image into grayscale in the processing of Sa2 in FIG. 2, but in a case where the noise of the image captured by the imaging device 2 is small, the noise removal processing may not be performed, and in a case where the image captured by the imaging device 2 is not in color but in grayscale, the grayscale conversion may not be performed. In addition, in the processing of Sa2 in FIG. 2, the image data acquisition unit 11 converts the image data into the grayscale image data to preserve the luminance of the image data and generates the original image data, but may convert the image data into the grayscale image data to preserve the brightness of the image data and generate the original image data. In this case, in the above-described embodiment, the "luminance" is replaced with "brightness".

In the above-described embodiment, the image processing unit 13 performs the processing of binarizing the difference image data in the processing of Sc5 in FIG. 4, but may not perform the binarization processing. In this case, the image processing unit 13 performs the processing of Sc6 for the difference image data generated in the processing of Sc4, that is, performs the processing of integrating the luminance values for each pixel of the difference image data generated in the processing of Sc4 to generate the processed image data, and thereafter, the processing of Sc7 and Sc8 is performed.

In the above-described embodiment, the filter unit 16 excludes the vector of the outer edge portion of the image, but in a case where reliability of the vector of the outer edge portion of the image is high, the filter unit 16 may not exclude the vector of the outer edge portion of the image.

In the above-described embodiment, as shown in the processing of Sb6 and Sb7 in FIG. 3, the vector generation unit 15 generates the first vector and then generates the second vector, but conversely, the vector generation unit 15 may generate the second vector and then generate the first vector, or may perform the processing of generating the first vector and the processing of generating the second vector in parallel.

In the above-described embodiment, the determination unit 18 determines the presence or absence of gas leakage for each image by using the frequency of each of the intervals equal to or larger than the predetermined vector length and the predetermined threshold value. On the other hand, in a case where there is a circumstance in which the length of a vector corresponding to the gas is empirically known, instead of using an interval equal to or larger than the predetermined vector length, an interval that includes the length of the vector corresponding to the gas may be determined in advance, and the presence or absence of gas leakage for each image may be determined by using the frequency of each of the predetermined intervals and the predetermined threshold value.

In the above-described embodiment, the image processing unit 13 receives the instruction signal indicating that the processing is to be continued from the determination unit 18 and performs the processing of Sb11 in FIG. 3. On the other hand, the image processing unit 13 may perform the processing of Sb11 after performing the processing of Sb5 without the determination unit 18 outputting the instruction signal indicating that the processing is to be continued.

In the above-described embodiment, in the processing of Sc5 in FIG. 4 and the processing of Sb10 in FIG. 3, the image processing unit 13 and the determination unit 18 perform the determination processing using the threshold value and determine whether or not the target value is equal to or larger than the threshold value. On the other hand, in the processing of each of Sc5 and Sb10, the processing may be performed to determine whether or not the target value exceeds the threshold value depending on how the threshold value is determined.

### (Configuration of Computer)

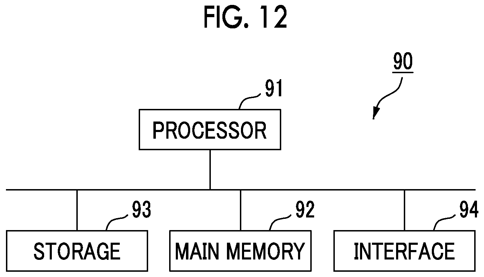

FIG. 12 is a schematic block diagram showing a configuration of a computer according to at least one embodiment. A computer 90 includes a processor 91, a main memory 92, a storage 93, and an interface 94. The gas leakage monitoring device 10 described above is mounted on the computer 90. The operations of each of the processing units described above, that is, the image data acquisition unit 11, the image processing unit 13, the vector generation unit 15, the filter unit 16, the frequency distribution generation unit 17, and the determination unit 18 are stored in the storage 93 in the form of a program. The processor 91 reads out the program from the storage 93 and loads the program into the main memory 92, and executes the above processing in accordance with the program. In addition, the processor 91 secures storage areas corresponding to the original image data storage unit 12 and the processed image data storage unit 14 described above in the main memory 92 or the storage 93 in accordance with the program. The display unit 19 is connected via the interface 94. Therefore, the display unit 19 may be a component of the computer 90, that is, a component of the gas leakage monitoring device 10 as described above, or may not be a component thereof.

The program may be configured to implement part of the functions executed by the computer 90. For example, the program may cause functions to be performed in combination with another program already stored in the storage 93 or in combination with another program implemented in another device. In another embodiment, the computer may include, in addition to the above configuration or instead of the above configuration, a custom large scale integrated circuit (LSI) such as a programmable logic device (PLD). Examples of the PLD include a programmable array logic (PAL), a generic array logic (GAL), a complex programmable logic device (CPLD), and a field-programmable gate array (FPGA). In this case, part or all of the functions implemented by the processor may be performed by the integrated circuit.

Examples of the storage 93 include a hard disk drive (HDD), a solid state drive (SSD), a magnetic disk, an optical magnetic disk, a compact disc read only memory (CD-ROM), a digital versatile disc read only memory (DVD-ROM), and a semiconductor memory. The storage 93 may be an internal medium directly connected to a bus of the computer 90 or may be an external medium connected to the computer 90 via the interface 94 or a communication line. In addition, in a case where the program is distributed to the computer 90 via the communication line, the computer 90 that receives the distribution may load the program into the main memory 92 and execute the above processing. In at least one embodiment, the storage 93 is a non-transitory computer-readable storage medium.

### <Supplementary Notes>

The gas leakage monitoring device 10 according to the embodiment of the present disclosure is understood as follows, for example.
(1) A gas leakage monitoring device 10 according to a first aspect includes an image data acquisition unit 11 that acquires, as original image data, image data generated by being captured at different times, a vector generation unit 15 that selects two pieces of original image data in chronological order from the original image data, and performs predetermined image processing of calculating a moving direction and a moving speed of an object included in an image on the selected two pieces of original image data to generate a vector indicating the moving direction and the moving speed for each pixel included in the original image data; and a frequency distribution generation unit 17 that classifies the vectors generated by the vector generation unit into predetermined intervals of vector length and generates a frequency distribution for gas leakage monitoring. According to the present aspect and each of the following aspects, it is possible to indicate the presence or absence of gas leakage with high accuracy in a shorter time.
(2) A gas leakage monitoring device 10 according to a second aspect is the gas leakage monitoring device 10 of (1), further including an image processing unit 13 that performs predetermined image processing of emphasizing gas on the original image data to generate processed image data, in which the vector generation unit generates a vector indicating a moving direction and a moving speed for each pixel included in the processed image data by using the processed image data instead of the original image data. According to the present aspect, even in a case where the gas is unclearly shown in the original image data, a vector corresponding to the gas can be generated from the processed image data in which the gas is emphasized.
(3) A gas leakage monitoring device 10 according to a third aspect is the gas leakage monitoring device 10 of (1), further including an image processing unit 13 that performs predetermined image processing of emphasizing gas on the original image data to generate processed image data, and a filter unit 16 that emphasizes and extracts vectors corresponding to the gas, in which the vector generation unit sets the vector generated for each pixel included in the original image data as a first vector, and further selects two pieces of the processed image data in chronological order from the processed image data and performs the predetermined image processing of calculating the moving direction and the moving speed of the object included in the image on the selected two pieces of processed image data to generate a vector indicating the moving direction and the moving speed for each pixel included in the processed image data as a second vector, the filter unit performs filtering on each of the second vectors for each pixel by using the first vector whose pixel corresponds to that of each second vector, and the frequency distribution generation unit generates a frequency distribution for the gas leakage monitoring by using the vectors extracted by the filter unit instead of the vectors generated by the vector generation unit. According to the present aspect, even in a case where an imaging device that performs imaging is moving and the gas is unclearly shown in the original image data, the processed image data in which the gas is emphasized is generated, and the vector corresponding to the gas is emphasized and extracted by performing filtering in consideration of a difference between the first vector generated from the original image data and the second vector generated from the processed image data, and the presence or absence of the gas leakage can be indicated by using the extracted vector.
(4) A gas leakage monitoring device 10 according to a fourth aspect is the gas leakage monitoring device 10 of (3), in which the vector generation unit selects two pieces of the original image data adjacent to each other in chronological order when selecting the two pieces of original image data, and selects processed image data corresponding to each of the selected two pieces of original image data when selecting the two pieces of processed image data. According to the present aspect, the two pieces of original image data from which the first vector is generated have a relationship of being adjacent in chronological order, and the two pieces of processed image data from which the second vector is generated are processed image data corresponding to each of the two pieces of original image data and are processed image data adjacent in chronological order. In this way, by using the image data adjacent in chronological order, the accuracy of the first vector and the second vector is improved, and further, by using the processed image data corresponding to each of the two pieces of original image data, the imaging range matches between the original image data and the processed image data, so that the vector corresponding to the gas can be extracted with higher accuracy.
(5) A gas leakage monitoring device 10 according to a fifth aspect is the gas leakage monitoring device 10 of (3) or (4), in which the filter unit performs filtering by adding the second vector and a vector that has a length obtained by multiplying a length of the first vector by a ratio that is 100% in a case where an angle formed by the second vector and the first vector having the same pixel position as the second vector is 0° and whose percentage value approaches 0% as the angle approaches 180°, and that has a direction opposite to a direction of the second vector. According to the present aspect, the vector corresponding to the gas can be emphasized from the second vector by using the first vector while excluding the vector corresponding to the fixed object such as a structure.
(6) A gas leakage monitoring device 10 according to a sixth aspect is the gas leakage monitoring device 10 of any one of (2) to (5), in which the image processing unit performs image processing of selecting combinations of two pieces of the original image data having a preceding and subsequent relationship in chronological order from the original image data to be processed and a plurality of pieces of the original image data acquired by the image data acquisition unit at times preceding the original image data to be processed, generating difference image data for each of the selected combinations, and integrating pixel values of the generated difference image data for each pixel to generate the processed image data corresponding to the original image data to be processed, as the predetermined image processing of emphasizing the gas. According to the present aspect, even in a case where the gas is unclearly shown in the original image data, the processed image data in which the gas is emphasized can be generated.
(7) A gas leakage monitoring device 10 according to a seventh aspect is the gas leakage monitoring device 10 of any one of (1) to (6), further including a determination unit 18 that determines presence or absence of gas leakage, in which the frequency distribution generation unit generates the frequency distribution in which a ratio of the number of the vectors for each interval, as a numerator, to a total number of the vectors, as a denominator, is a frequency for each interval, and the determination unit determines the presence or absence of the gas leakage based on a frequency of the predetermined interval and a predetermined threshold value. According to the present aspect, it is not necessary for a person to determine the presence or absence of the gas leakage by referring to the histogram, and the determination unit 18 can determine the presence or absence of the gas leakage from the frequency distribution data generated by the frequency distribution generation unit 17.
(8) A gas leakage monitoring device 10 according to an eighth aspect is the gas leakage monitoring device 10 of any one of (1) to (7), in which the filter unit excludes a vector corresponding to a pixel at an outer edge of the image data from the vectors after emphasizing and extracting the vector corresponding to the gas. According to the present aspect, the vectors used in a case of generating the frequency distribution can be narrowed down to the vector having high reliability, so that the accuracy of the frequency distribution can be improved, and accordingly, the presence or absence of the gas leakage can be distinguished with high accuracy.

### Industrial Applicability

According to the gas leakage monitoring device, the gas leakage monitoring method, and the program of the present disclosure, it is possible to indicate the presence or absence of gas leakage with high accuracy in a shorter time.

### Reference Signs List

1: gas leakage monitoring system
2: imaging device
3: communication network
10: gas leakage monitoring device
11: image data acquisition unit
12: original image data storage unit
13: image processing unit
14: processed image data storage unit
15: vector generation unit
16: filter unit
17: frequency distribution generation unit
18: determination unit
19: display unit

## Claims

1. A gas leakage monitoring device comprising:
an image data acquisition unit that acquires, as original image data, image data generated by being captured at different times;
a vector generation unit that selects two pieces of original image data in chronological order from the original image data, and performs predetermined image processing of calculating a moving direction and a moving speed of an object included in an image on the selected two pieces of original image data to generate a vector indicating the moving direction and the moving speed for each pixel included in the original image data; and
a frequency distribution generation unit that classifies the vectors generated by the vector generation unit into predetermined intervals of vector length and generates a frequency distribution for gas leakage monitoring.

2. The gas leakage monitoring device according to Claim 1, further comprising:
an image processing unit that performs predetermined image processing of emphasizing gas on the original image data to generate processed image data,
wherein the vector generation unit generates a vector indicating a moving direction and a moving speed for each pixel included in the processed image data by using the processed image data instead of the original image data.

3. The gas leakage monitoring device according to Claim 1, further comprising:
an image processing unit that performs predetermined image processing of emphasizing gas on the original image data to generate processed image data; and
a filter unit that emphasizes and extracts vectors corresponding to the gas,
wherein the vector generation unit sets the vector generated for each pixel included in the original image data as a first vector, and further selects two pieces of the processed image data in chronological order from the processed image data and performs the predetermined image processing of calculating the moving direction and the moving speed of the object included in the image on the selected two pieces of processed image data to generate a vector indicating the moving direction and the moving speed for each pixel included in the processed image data as a second vector,
the filter unit performs filtering on each of the second vectors for each pixel by using the first vector whose pixel corresponds to that of each second vector, and
the frequency distribution generation unit generates a frequency distribution for the gas leakage monitoring by using the vectors extracted by the filter unit instead of the vectors generated by the vector generation unit.

4. The gas leakage monitoring device according to Claim 3,
wherein the vector generation unit selects two pieces of the original image data adjacent to each other in chronological order when selecting the two pieces of original image data, and selects processed image data corresponding to each of the selected two pieces of original image data when selecting the two pieces of processed image data.

5. The gas leakage monitoring device according to Claim 3,
wherein the filter unit performs filtering by adding the second vector and a vector that has a length obtained by multiplying a length of the first vector by a ratio that is 100% in a case where an angle formed by the second vector and the first vector having the same pixel position as the second vector is 0° and whose percentage value approaches 0% as the angle approaches 180°, and that has a direction opposite to a direction of the second vector.

6. The gas leakage monitoring device according to any one of Claims 2 to 5,
wherein the image processing unit performs image processing of selecting combinations of two pieces of the original image data having a preceding and subsequent relationship in chronological order from the original image data to be processed and a plurality of pieces of the original image data acquired by the image data acquisition unit at times preceding the original image data to be processed, generating difference image data for each of the selected combinations, and integrating pixel values of the generated difference image data for each pixel to generate the processed image data corresponding to the original image data to be processed, as the predetermined image processing of emphasizing the gas.

7. The gas leakage monitoring device according to any one of Claims 1 to 5, further comprising:
a determination unit that determines presence or absence of gas leakage,
wherein the frequency distribution generation unit generates the frequency distribution in which a ratio of the number of the vectors for each interval, as a numerator, to a total number of the vectors, as a denominator, is a frequency for each interval, and
the determination unit determines the presence or absence of the gas leakage based on a frequency of the predetermined interval and a predetermined threshold value.

8. The gas leakage monitoring device according to any one of Claims 3 to 5,
wherein the filter unit excludes a vector corresponding to a pixel at an outer edge of the image data from the vectors after emphasizing and extracting the vector corresponding to the gas.

9. A gas leakage monitoring method comprising:
a step of acquiring, as original image data, image data generated by being captured at different times;
a step of selecting two pieces of original image data in chronological order from the acquired original image data and performing predetermined image processing of calculating a moving direction and a moving speed of an object included in an image on the selected two pieces of original image data to generate a vector indicating the moving direction and the moving speed for each pixel included in the original image data; and
a step of classifying the generated vectors into predetermined intervals of vector length and generating a frequency distribution for gas leakage monitoring.

10. A program causing a computer to execute:
a step of acquiring, as original image data, image data generated by being captured at different times;
a step of selecting two pieces of original image data in chronological order from the acquired original image data and performing predetermined image processing of calculating a moving direction and a moving speed of an object included in an image on the selected two pieces of original image data to generate a vector indicating the moving direction and the moving speed for each pixel included in the original image data; and
a step of classifying the generated vectors into predetermined intervals of vector length and generating a frequency distribution for gas leakage monitoring.
